# EUROPEAN PATENT SPECIFICATION

(11) **EP 1 914 825 B1**
(45) Date of publication and mention of the grant of the patent: **23.02.2011**
(21) Application number: 07115015.5
(22) Date of filing: 27.08.2007
(51) Int. Cl.: H01M 8/10, H01M 4/86, H01M 4/88, H01M 4/90, H01M 8/04

(54) **Membrane-electrode assembly for fuel cell, method of preparing same, and fuel cell system comprising same**
Membranelektrodenanordnung für eine Brennstoffzelle, Verfahren zu deren Herstellung sowie Brennstoffzellensystem damit
Ensemble membrane-électrode pour pile à combustible, son procédé de préparation et pile à combustible l'incluant

(30) Priority: 31.08.2006 KR 20060083524
(43) Date of publication of application: 23.04.2008
(73) Proprietor: Samsung SDI Co., Ltd., Suwon-si Gyeonggi-do (KR)
(72) Inventor: Han, Sang-Il Samsung SDI Co., Ltd.,, Suwon-si, Gyeonggi-do (KR); Son, In-Hyuk Samsung SDI Co., Ltd.,, Suwon-si, Gyeonggi-do (KR); Jang, Moon-Yup Samsung SDI Co., Ltd.,, Suwon-si, Gyeonggi-do (KR); Lee, Han-kyu Samsung SDI Co., Ltd.,, Suwon-si, Gyeonggi-do (KR)
(74) Representative: Gulde, Klaus W.

(56) References cited:
- EP-A- 1 328 032
- JP-A- 5 258 756
- JP-A- 7 161 368
- JP-A- 8 148 176
- US-A1- 2004 081 880
- US-A1- 2005 112 435
- US-A1- 2005 250 002

## Description

### FIELD OF THE INVENTION

The present invention relates to a membrane-electrode assembly for a fuel cell, a method of preparing the same, and a fuel cell system including the same.

### BACKGROUND OF THE INVENTION

A fuel cell is a power generation system for producing electrical energy through an electrochemical redox reaction of an oxidant and a fuel such as hydrogen, or a hydrocarbon-based material such as methanol, ethanol, natural gas, and the like. Such a fuel cell is a clean energy source that can replace fossil fuels. It includes a stack composed of unit cells and produces various ranges of power output. Since it has four to ten times higher energy density than a small lithium battery, it has been highlighted as a small portable power source.

Representative exemplary fuel cells include a polymer electrolyte membrane fuel cell (PEMFC) and a direct oxidation fuel cell (DOFC). The direct oxidation fuel cell includes a direct methanol fuel cell that uses methanol as a fuel.

The polymer electrolyte fuel cell has an advantage of high energy density and high power, but it also has problems in the need to carefully handle hydrogen gas and the requirement of accessory facilities, such as a fuel reforming processor, for reforming hydrocarbon-based gases in order to produce hydrogen as the fuel gas.

On the contrary, a direct oxidation fuel cell has a lower energy density than that of the gas-type fuel cell but has the advantages of easy handling of the liquid-type fuel, a low operation temperature, and no need for additional fuel reforming processors. Therefore, it has been acknowledged as an appropriate system for a portable power source for small and common electrical equipment.

In the above-mentioned fuel cell system, the stack that generates electricity substantially includes several to many unit cells stacked adjacent to one another, and each unit cell is formed of a membrane-electrode assembly (MEA) and a separator (also referred to as a bipolar plate). The membrane-electrode assembly is composed of an anode (also referred to as a "fuel electrode" or an "oxidation electrode") and a cathode (also referred to as an "air electrode" or a "reduction electrode") that are separated by a polymer electrolyte membrane.

A fuel is supplied to an anode and adsorbed on catalysts of the anode, and the fuel is oxidized to produce protons and electrons. The electrons are transferred into a cathode via an external circuit, and the protons are transferred into the cathode through the polymer electrolyte membrane. In addition, an oxidant is supplied to the cathode, and then the oxidant, protons, and electrons are reacted on catalysts of the cathode to produce electricity along with water.

For the polymer electrolyte membrane, a perfluorosulfonic acid resin membrane (NAFION^{®}) having good conductivity, mechanical properties, and chemical resistance has been commonly used. The perfluorosulfonic acid resin membrane has a thickness ranging from 130 to 180µm to inhibit crossover of a hydrocarbon fuel. However, the thicker the perfluorosulfonic acid resin membrane is, the worse the proton conductivity grows and the higher the cost of the polymer electrolyte membrane becomes.

Particularly, a polymer electrolyte membrane that is thermally compressed with a platinum catalyst electrode undergoes a change of 15 to 30% in membrane thickness and volume depending on temperature and degree of hydration, and results in a volume change of over 200% maximum with 3 to 50wt% methanol as a fuel. Such a thickness increase of an electrolyte membrane applies a stress to a gas diffusion layer as an electrode substrate, and thus a dimension change in a surface direction induces a physical deterioration at the interface between catalyst particles and an electrolyte membrane during long term operation. JP 08148176 refers to a membrane-electrode assembly including a Nafion film having of a predetermined surface roughness and being covered by a Pt film. A pitch p and a depth d of the surface structure of the Nation film are set within the limits of 50 through 500 nm. US 2003/0186109 A1 discloses another conventional membrane-electrode assembly with catalyst-coated electrodes.

### SUMMARY OF THE INVENTION

One embodiment of the present invention provides a membrane-electrode assembly that has excellent adherence between a polymer electrolyte membrane and a catalyst layer, a good moisture retention property in a polymer electrolyte membrane, and that decreases fuel crossover due to an osmotic pressure decrease and thus improves cell performance.

Another embodiment of the present invention provides a method of preparing the membrane-electrode assembly for a fuel cell.

Yet another embodiment of the present invention provides a fuel cell system including the membrane-electrode assembly.

According to an embodiment of the present invention, a membrane-electrode assembly according to claim 1 is provided.

According to yet another embodiment of the present invention, a method of fabricating a membrane-electrode assembly according to claim 7 is provided.

According to yet another embodiment of the present invention, a fuel cell system according to claim 13 is provided.

### BRIEF DESCRIPTION OF THE DRAWINGS

FIG. 1 is a schematic cross-sectional view showing a membrane-electrode assembly according to an embodiment of the present invention;
FIG. 2 is a schematic flowchart showing a process of fabricating a membrane-electrode assembly according to another embodiment of the present invention;
FIG. 3 is a schematic diagram showing the structure of a fuel cell system according to another embodiment of the present invention;
FIG. 4 is a scanning electron microscope (SEM) photograph showing a cross-section of a polymer electrolyte membrane after sandblasting surface-treatment during fabrication of a single cell according to Example 1;
FIG. 5 is a SEM photograph showing a surface of a polymer electrolyte membrane after sandblasting surface-treatment during a fabrication of a single cell according to Example 1 (scale bar size: 40µm);
FIG. 6 is a SEM photograph showing a surface of a metal layer that is disposed on a surface-treated polymer electrolyte membrane by Au sputtering during fabrication of a single cell according to Example 1 (scale bar size: 1µm);
FIG. 7 is a SEM photograph showing a surface of a metal layer that is disposed on a surface-treated polymer electrolyte membrane by Au sputtering during fabrication of a single cell according to Example 1 (scale bar size: 40µm);
FIG. 8A is a SEM photograph showing a cross-section of a polymer electrolyte membrane that includes a metal layer disposed on a surface-treated polymer electrolyte membrane by Au sputtering during fabrication of a single cell according to Example 1;
FIG. 8B is a partial enlarged view of the metal layer in FIG. 8A;
FIG. 9A is a graph showing moisture retention properties of polymer electrolyte membranes prepared in accordance with Example 3 and Comparative Examples 1 and 2 by using a differential scanning calorimeter (DSC) after drying the polymer electrolyte membranes in a vacuum oven at 60°C for one hour;
FIG. 9B is a graph showing moisture retention properties of polymer electrolyte membranes prepared in accordance with Example 3 and Comparative Examples 1 and 2 by using DSC after impregnating the polymer electrolyte membranes in distilled water at 60°C for one hour and then drying the polymer electrolyte membranes;
FIG. 10A is a graph showing CO stripping voltammetry of membrane-electrode assemblies prepared in accordance with Example 3 and Comparative Example 1 at 50°C; and
FIG. 10B is a graph showing CO stripping voltammetry of membrane-electrode assemblies prepared in accordance with Example 3 and Comparative Example 1 at 70°C.

### DETAILED DESCRIPTION

A membrane-electrode assembly of a fuel cell according to one embodiment of the present invention is composed of a polymer electrolyte membrane and an anode and a cathode disposed at both sides of the polymer electrolyte membrane. The membrane-electrode assembly generates electricity through oxidation of a fuel and reduction of an oxidant. The reactions of such a membrane-electrode assembly have been affected by adherence and contact areas at the interface between a polymer electrolyte membrane and an electrode. The higher the adherence and contact area is, the better the reactions occur.

In general, the polymer electrolyte membrane is a perfluorosulfonic acid resin membrane. A thicker perfluorosulfonic acid resin membrane provides better dimensional stability and mechanical properties, but increased membrane resistance. A thinner membrane provides lower membrane resistance, but diminished mechanical properties whereby unreacted fuel gas and liquid tend to pass through the polymer membrane resulting in lost, unreacted fuel during operation and lower performance of the cell. Moreover, since hydrocarbon-based fuel is transferred to the cathode through a polymer electrolyte membrane and oxidized in a cathode in a direct oxidation fuel cell using hydrocarbon-based fuel such as methanol, ethanol, and propanol, the reduction space of an oxidant is reduced in the cathode and this degrades the battery performance.

Therefore, it is desired to develop a technique for controlling an interface between the polymer electrolyte membrane and the electrode, and a technique for controlling the physical and chemical interface characteristics to prevent the durability of the membrane-electrode assembly from being deteriorated due to separation of the catalyst layer, and thus maximizing electrode catalyst efficiency.

According to the present invention, it is possible to increase the adherence between the polymer electrolyte membrane and the catalyst layer, increase the contact area, improve moisture retention properties of the polymer electrolyte membrane, and reduce fuel crossover caused by decreased osmotic pressure. This may be accomplished by forming a membrane having appropriate surface roughness and randomly forming a metal layer on the membrane in the membrane-electrode assembly.

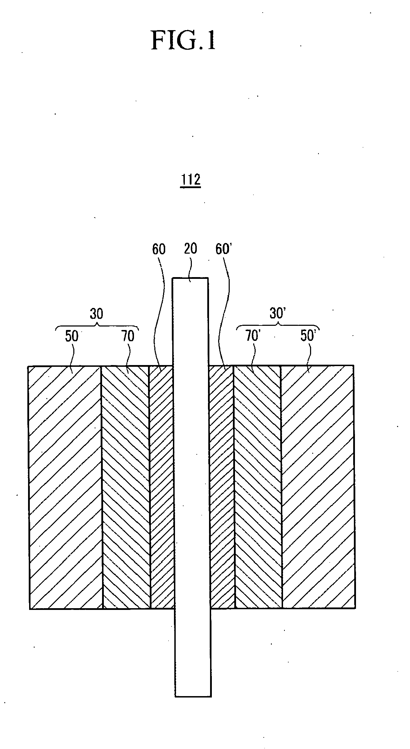

FIG. 1 is a schematic cross-sectional view showing a membrane-electrode assembly according to an embodiment of the present invention.

Referring to FIG. 1, a membrane-electrode assembly 112 of the present invention includes a polymer electrolyte membrane 20 and electrodes 30 and 30' for a fuel cell disposed on both sides of the polymer electrolyte membrane 20. Metal layers 60 and 60' are randomly formed on at least one side of the membrane 20. Also, the electrodes 30 and 30' include an electrode substrate 50 or 50' and a catalyst layer 70 or 70' formed on the surface of the electrode substrate.

The membrane 20 performs an ion exchange function, that is, it transfers protons generated in the catalyst layer 70 of the anode 30 to the catalyst layer 70' of the cathode 30' in the polymer electrolyte membrane 20.

The membrane 20 has a predetermined roughness on one side, or on both sides, to increase the contact area with the metal layer 60 and 60' and the catalyst layer 70 or 70' of the electrode for high power output. The membrane 20 has an average surface roughness Rₐ in the range of 200nm to 2µm, and preferably in the range of 500nm to 2µm. When the average surface roughness of the membrane 20 is not more than 200nm, the active specific surface area with the catalyst layer is small and the adherence to the catalyst layer may be diminished after a long time. When the average surface roughness of the membrane 20 exceeds 2µm, the mechanical strength of the membrane 20 may be reduced, which is also not desirable.

One or both sides of the membrane 20 may be patterned. The pattern formed in the membrane 20 may be a regular pattern. When the pattern is irregular, there may be non-uniform current and a reduction in the fuel cell performance.

The membrane 20 has a thickness ranging from 50 to 150µm, in another embodiment from 110 to 140µm. When the membrane 20 is thinner than 50µm, the mechanical strength may be deteriorated. When it is thicker than 150µm, membrane resistance may be increased, which is not desirable.

The membrane may include a highly proton-conductive polymer. In one embodiment, the proton-conductive polymer may be a polymer resin having a cation exchange group selected from the group consisting of a sulfonic acid group, a carboxylic acid group, a phosphoric acid group, a phosphonic acid group, and derivatives thereof, at its side chain.

In one embodiment, the proton-conductive polymer may include at least one selected from the group consisting of fluoro-based polymers, benzimidazole-based polymers, polyimide-based polymers, polyetherimide-based polymers, polyphenylenesulfide-based polymers, polysulfone-based polymers, polyethersulfone-based polymers, polyetherketone-based polymers, polyether-etherketone-based polymers, and polyphenylquinoxaline-based polymers. According to an embodiment, the polymer electrolyte membrane includes proton conductive polymers selected from the group consisting of poly(perfluorosulfonic acid) (NAFION^{®}), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), and poly(2,5-benzimidazole).

H in an ion exchange group of the proton conductive polymer can be replaced with Na, K, Li, Cs, or tetrabutyl ammonium. When the H is substituted by Na in an ion exchange group at the terminal end of the proton conductive polymer, NaOH is used. When the H is replaced with tetrabutylammonium, tributylammonium hydroxide is used. K, Li, or Cs can also be replaced by using appropriate compounds. Since a method of substituting H is widely known in this related art, detailed description thereof will not be provided herein.

The membrane 20 includes the metal layers 60 and 60' randomly disposed in at least one side. Randomly disposed means that the metal layers 60 and 60' do not form a closed layer covering the membrane 20; the metal layers 60 and 60' are still transparent for the moisture.

The metal layers 60 and 60' disposed on one or both sides of the membrane 20 not only improve cooperative performance between the membrane 20 and the catalyst layers 70 and 70', but also reduce crossover of fuel. Therefore, it is desirable to dispose the metal layers on both sides of the membrane 20, instead of forming a metal layer on any one side of the membrane 20. In an embodiment, when it is disposed on one side, it is desirable to dispose the metal layer on a side adjacent to the anode.

In one embodiment, the metal layers 60 and 60' may be randomly disposed in the membrane 20 in the form of a nano nodule or a nano horn. In another embodiment, the metal layers 60 and 60' are formed in the shape of a nano nodule. When a metal layer has the shape of a nano nodule, the metal layer is porous and this is advantageous because the morphology of the metal layer interface is increased three-dimensionally. In other words, the metal layers 60 and 60' are porous; i.e. that the moisture can easily pass the metal layers 60 and 60'. Therefore, the metal layers 60 and 60' are deposited such on the polymer electrolyte membrane 20 that they are porous.

The metal layers 60 and 60' consist of Au.

Also, the metal in the metal layers 60 and 60' directly increases the number of oxide species quantitatively through a bifunctional mechanism with respect to electro-oxidation. Thus, it is possible to improve an electrode activity for an oxidation reaction of fuel.

In one embodiment, the membrane 20 and the metal layers 60 and 60' may have a thickness ratio of 25:1 to 1500:1, and in another embodiment 100:1 to 260:1. When the thickness ratio of the membrane to the metal layer is within the range, the co-catalytic effect of the metal element in the metal layer is maximized. Since the porous state is maintained, the specific surface area is increased, which is desirable. When the thickness ratio is out of the range, the density of the metal layer is increased. Since this allows less access of fuel, it is not desirable.

The metal layers 60 and 60' have a thickness in the range of 100nm to 2µm, preferably from 500nm to 1µm. When the metal layer is thinner than 100nm, the effect obtained from the formation of the metal layer may be insignificant. When the metal layer is thicker than 2µm, it provides narrow paths for fuel.

An anode 30 and a cathode 30' are disposed on respective sides of the polymer electrolyte membrane.

At least one of the anode 30 and the cathode 30' includes electrode substrates 50 and 50' and catalyst layers 70 and 70' disposed on the electrode substrates 50 and 50'.

The electrode substrates 50 and 50' of the anode and cathode support the anode 30 and cathode 30', respectively, and provide a path for transferring fuel and oxidant to the catalyst layers 70 and 70'. Such electrode substrates 50 and 50' may be conductive substrates. As for the electrode substrates 50 and 50', a conductive substrate is used, for example carbon paper, carbon cloth, carbon felt, and metal cloth (a porous film including a metal cloth fiber or a metalized polymer fiber), but it is not limited thereto.

The electrode substrates 50 and 50' may be treated with a fluorine-based resin to be water-repellent to prevent deterioration of diffusion efficiency due to water generated during operation of a fuel cell. In one embodiment, the fluorine-based resin may be one selected from the group consisting of polytetrafluoroethylene, polyvinylidene fluoride, polyhexafluoro propylene, polyperfluoroalkylvinylether, polyperfluoro sulfonylfluoride alkoxyvinyl ether, fluorinated ethylene propylene, polychlorotrifluoro ethylene, and copolymers thereof, but it is not limited thereto.

A microporous layer (MPL, not shown) can be added between the aforementioned electrode substrates 50 and 50' and catalyst layer to increase reactant diffusion effects. The microporous layer generally includes conductive powders with a particular particle diameter. In one embodiment, the conductive material may include, but is not limited to, carbon powder, carbon black, acetylene black, activated carbon, carbon fiber, fullerene, nano-carbon, or combinations thereof. The nano-carbon may include a material such as carbon nanotubes, carbon nanofiber, carbon nanowire, carbon nanohorns, carbon nanorings, or combinations thereof.

The microporous layer is formed by coating a composition comprising a conductive powder, a binder resin, and a solvent on the conductive substrate. In one embodiment, the binder resin may include, but is not limited to, polytetrafluoro ethylene, polyvinylidene fluoride, polyhexafluoro propylene, polyperfluoroalkylvinyl ether, polyperfluoro sulfonylfluoride alkoxy vinyl ether, polyvinyl alcohol, cellulose acetate, or copolymers thereof. In one embodiment, the solvent may include, but is not limited to, an alcohol such as ethanol, isopropyl alcohol, n-propyl alcohol, butanol and so on, water, dimethyl acetamide, dimethyl sulfoxide, N-methylpyrrolidone, and tetrahydrofuran. In one embodiment, the coating method may include, but is not limited to, screen printing, spray coating, doctor blade methods, gravure coating, dip coating, silk screening, painting, and so on, depending on the viscosity of the composition.

The catalyst layers 70 and 70' are disposed on the electrode substrates 50 and 50'.

The catalyst layers 70 and 70' include catalysts to promote related reactions, such as fuel oxidation and oxidant reduction.

The catalysts may be any platinum-based catalyst that can promote a fuel cell reaction. These platinum-based catalysts include platinum, ruthenium, osmium, platinum-ruthenium alloys, platinum-osmium alloys, platinum-palladium alloys, platinum-M alloys, and combinations thereof, where M is a transition element selected from the group consisting of Ga, Ti, V, Cr, Mn, Fe, Co, Ni, Cu, Zn, Sn, Mo, W, Rh, and combinations thereof. According to an embodiment, platinum-based catalysts may include Pt, Pt/Ru, Pt/W, Pt/Ni, Pt/Sn, Pt/Mo, Pt/Pd, Pt/Fe, Pt/Cr, Pt/Co, Pt/Ru/W, Pt/Ru/Mo, Pt/Ru/V, Pt/Fe/Co, Pt/Ru/Rh/Ni, Pt/Ru/Sn/W, and combinations thereof.

The metal catalyst may be supported on a carrier, or it may be a black type of catalyst that is not supported on a carrier. In one embodiment, the carrier may include carbon-based materials such as graphite, denka black, ketjen black, acetylene black, carbon nanotubes, carbon nanofiber, carbon nanowire, carbon nanoballs, and activated carbon. In one embodiment, for a carrier, an inorganic particulate such as alumina, silica, zirconia, and titania may also be used. A carbon-based material is generally used as a carrier.

The catalyst layers 70 and 70' may further include a binder resin to improve adherence of catalyst layers and proton conductivity.

In one embodiment, the binder resin may be a proton-conductive polymer resin having a cation exchange group selected from the group consisting of a sulfonic acid group, a carboxylic acid group, a phosphoric acid group, a phosphonic acid group, and derivatives thereof, at its side chain. In an embodiment, the proton-conductive polymer may include at least one selected from the group consisting of fluoro-based polymers, benzimidazole-based polymers, polyimide-based polymers, polyetherimide-based polymers, polyphenylenesulfide-based polymers polysulfone-based polymers, polyethersulfone-based polymers, polyetherketone-based polymers, polyether-etherketone-based polymers, and polyphenylquinoxaline-based polymers. In another embodiment, the polymer electrolyte membrane includes proton conductive polymers selected from the group consisting of poly(perfluorosulfonic acid) (NAFION^{®}), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), or poly(2,5-benzimidazole).

The binder resins may be used singularly or in combination. They may be used along with non-conductive polymers to improve adherence with a polymer electrolyte membrane. The binder resins may be used in a controlled amount adapted to their purposes.

Non-limiting examples of the non-conductive polymers include polytetrafluoroethylene (PTFE), tetrafluoroethylene-hexafluoropropylene copolymers (FEP), tetrafluoroethylene-perfluoro alkyl vinylether copolymers (PFA), ethylene/tetrafluoroethylene (ETFE), chlorotrifluoroethylene-ethylene copolymers (ECTFE), polyvinylidene fluoride, polyvinylidenefluoride-hexafluoropropylene copolymers (PVdF-HFP), dodecylbenzene sulfonic acid, sorbitol, or combinations thereof.

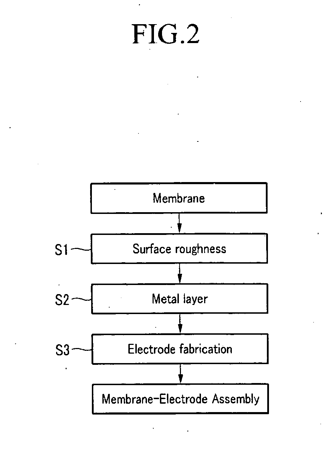

FIG. 2 is a view describing a preparation method of a membrane-electrode assembly in accordance with an embodiment of the present invention.

Referring to FIG. 2, the membrane-electrode assembly may be prepared by forming roughness on the surface of the membrane through a surface treatment at step S1, forming a metal layer on the membrane having a rough surface to thereby form a polymer electrolyte membrane at step S2, and forming an anode and a cathode on the polymer electrolyte membrane at step S3.

First, a polymer electrolyte membrane is prepared. A method for forming the membrane is not limited to a specific method, and the membrane can be fabricated in the form of a thin film by using a conventional fabrication method and proton-conductive cation exchange resin. The proton-conductive cation exchange resin may be the same as described above.

Subsequently, roughness is formed on the surface of the membrane through surface treatment at step S1. As for the surface treatment, a conventional patterning method may be used. In one embodiment, the surface treatment may be one selected from the group consisting of sandpapering, sandblasting, corona treatment, rubbing, compressing, a plasma method, electron beam irradiation, and combinations thereof. In another embodiment, the surface treatment may be sandpapering.

The patterning of the membrane may be performed on one or both sides of the membrane, and in an embodiment, the patterning is performed on both sides of the membrane.

Subsequently, a metal layer is disposed on the membrane having the roughness to thereby prepare a polymer electrolyte membrane at step S2.

In an embodiment, the metal layer is formed on the membrane by using a method selected from the group consisting of sputtering, Physical Vapor Deposition (PVD), Chemical Vapor Deposition (CVD), Plasma Enhanced Chemical Vapor Deposition (PECVD), Thermal Chemical Vapor Deposition (TCVD), electron beam evaporation, vacuum thermal evaporation, laser ablation, thermal evaporation, e-beam evaporation, and combinations thereof. In another embodiment, the metal layer is disposed by using the sputtering method.

When the metal layer is disposed by the sputtering method, in one embodiment, it is desirable to apply a current in the range of 3 to 9mA, and in another embodiment from 5 to 7mA. When the current is lower than 3mA, the density of the metal layer is increased and thus the metal layer provides narrower paths for fuel. When the current is higher than 7mA, the porosity of the metal layer is increased and thus the mechanical strength of the metal layer may be deteriorated.

In one embodiment, the sputtering may be performed for 50 to 300 seconds, and in another embodiment for 50 to 250 seconds. When the sputtering is performed for less than 50 seconds, the porosity of the metal layer is excessively increased and the mechanical strength is deteriorated. When the sputtering is performed for longer than 300 seconds, the density of the metal layer is increased too much to provide appropriate paths for fuel.

As described above, the metal layer may be formed to have a thickness ratio in the range of 25:1 to 1500:1.

Subsequently, the preparation of the membrane-electrode assembly is completed by forming an anode and a cathode in the polymer electrolyte membrane at step S3.

Since the electrode substrate and the catalyst layer are as described above and an exemplary method for bonding the electrode substrate with the polymer electrolyte membrane is widely known to those skilled in the art of the present invention, a detailed description thereof will not be provided herein.

The above-prepared membrane-electrode assembly includes the membrane having appropriate roughness on the surface through a surface treatment, and a metal layer formed on the membrane. Therefore, the contact area and the adherence between the polymer electrolyte membrane and the catalyst layer are increased, and the moisture retention property of the polymer electrolyte membrane is improved. Also, the crossover of fuel caused by decreased osmotic pressure can be reduced and this brings about excellent fuel cell characteristics.

Another embodiment of the present invention provides a fuel cell system including the above membrane-electrode assembly.

In one embodiment, a fuel cell system of the present invention includes at least one of an electricity generating element, a fuel supplier, and an oxidant supplier.

The electricity generating element includes a membrane-electrode assembly that includes a polymer electrolyte membrane and a cathode and an anode positioned at both sides of the polymer electrolyte membrane, and separators positioned at both sides of the membrane-electrode assembly. The electricity generating element generates electricity through oxidation of a fuel and reduction of an oxidant.

The fuel supplier supplies the electricity generating element with a fuel including hydrogen, and the oxidant supplier supplies the electricity generating element with an oxidant. The oxidant includes oxygen or air.

In one embodiment, the fuel includes liquid or gaseous hydrogen, or a hydrocarbon-based fuel such as methanol, ethanol, propanol, butanol, or natural gas.

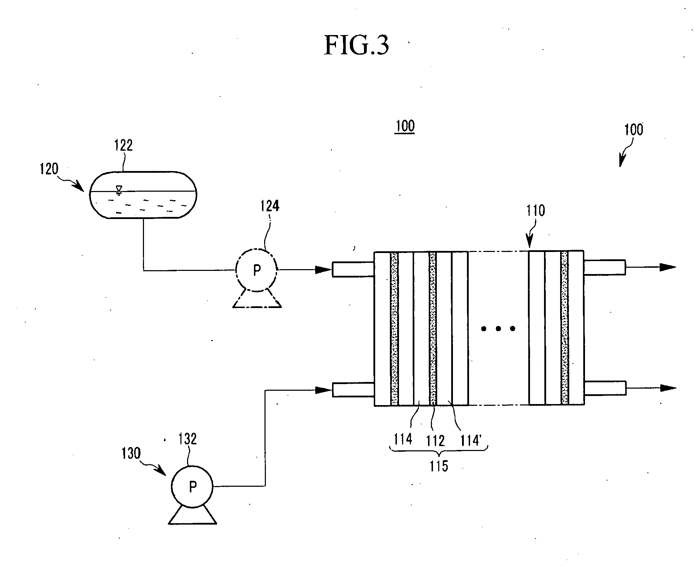

FIG. 3 shows a schematic structure of a fuel cell system 100 that will be described in detail with reference to this accompanying drawing as follows. FIG. 3 illustrates a fuel cell system wherein a fuel and an oxidant are provided to the electricity generating element 115 through pumps 124 and 132, but the present invention is not limited to such structures. The fuel cell system of the present invention alternately includes a structure wherein a fuel and an oxidant are provided in a diffusion manner.

The fuel cell system 100 includes at least one electricity generating element 115 that generates electrical energy through an electrochemical reaction of a fuel and an oxidant, a fuel supplier 120 for supplying a fuel to the electricity generating element 115, and an oxidant supplier 130 for supplying an oxidant to the electricity generating element 115.

In addition, the fuel supplier 120 is equipped with a tank 122 that stores fuel, and a fuel pump 124, which is connected to the fuel tank 122. The fuel pump 124 supplies fuel stored in the tank 122 to a fuel cell stack 110.

The oxidant supplier 130, which supplies the electricity generating element 115 with an oxidant, is equipped with at least one pump 132 for supplying an oxidant to the stack 110.

The electricity generating element 115 includes a membrane-electrode assembly 112, which oxidizes hydrogen or a fuel and reduces an oxidant, and separators 114 and 114' that are respectively positioned at opposite sides of the membrane-electrode assembly and supply hydrogen or a fuel, and an oxidant, respectively. At least one electricity generating element 115 constitutes the stack 110.

The following examples illustrate the present invention in more detail. However, it is understood that the present invention is not limited by these examples.

### Example 1

For a membrane, a commercial product NAFION 115 membrane having a thickness of 125µm was rinsed with distilled water several times and treated with 1 liter of 2% hydrogen peroxide for 2 hours. Subsequently, the hydrogen peroxide was removed by rinsing with distilled water three times, and then the NAFION 115 membrane was treated with 1 liter of 1 M sulfuric acid solution for 2 hours. The NAFION 115 membrane was rinsed with distilled water again, such that an H-type NAFION 115 membrane was prepared.

Both sides of the NAFION 115 membrane were sandblasted to form a pattern. One side of the patterned NAFION 115 membrane toward the anode was sputtered with Au at 20°C for 100 seconds to thereby form an Au metal layer having a thickness of 500nm and prepare a polymer electrolyte membrane.

10wt% solid content of a composition for forming a catalyst layer was prepared by mixing 10g of Pt black (HISPEC^{®} 1000 produced by the Johnson Matthey Company), 10g of Pt/Ru black (HISPEC^{®} 6000 produced by the Johnson Matthey Company), 10g of water, 12wt% of a 5wt% concentration of NAFION solution, and 62g of isopropyl alcohol. The composition for forming a catalyst layer was sprayed onto the Au sputtered polymer electrolyte membrane. Herein, the catalyst layer area was 3.2X3.2 cm² and the catalyst loading quantity was 4mg/cm². The catalyst layer prepared as above became an anode catalyst layer. A cathode catalyst layer was formed by performing the same process onto the other side of the polymer electrolyte membrane.

Subsequently, an electrode substrate (uncatalyzed gas diffusion electrode, SGL Carbon 10DA) was prepared to have a microporous layer with a Vulcan black loading quantity of 1.4mg/cm² by using a composition for forming a microporous layer including Vulcan black (VULCAN SDN 2). The electrode substrate was bonded with the polymer electrolyte membrane having the cathode catalyst layer by pressing the electrode substrate with a compression molder at 300 psi and 135°C for 3 minutes. Also, an electrode substrate (uncatalyzed gas diffusion electrode, SGL Carbon 31 BC) without a microporous layer was physically bonded with the polymer electrolyte membrane having the anode catalyst layer to thereby prepare a membrane-electrode assembly. The membrane-electrode assembly was interposed between two gaskets, interposed again between two separators having a predetermined gas flow channel and a cooling channel, and then compressed between Cu end plates to thereby prepare a single cell.

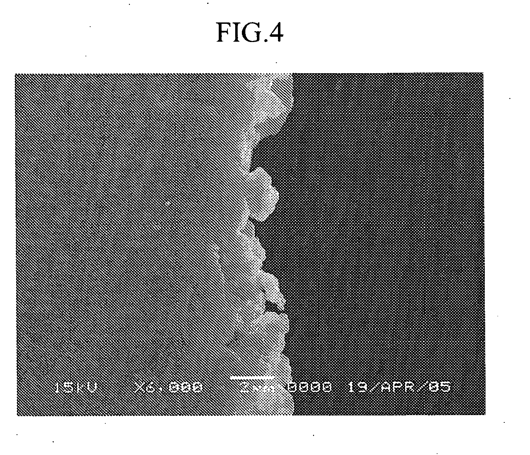

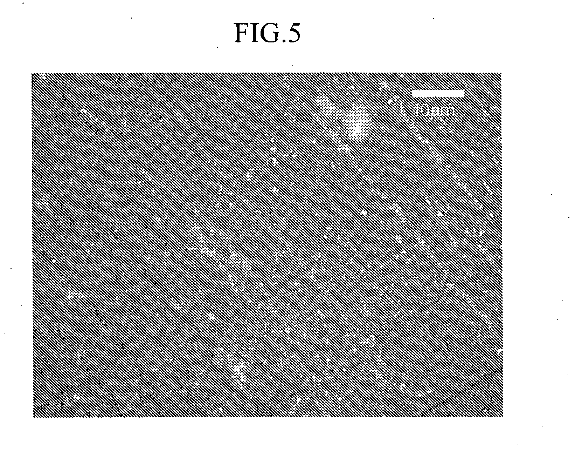

FIG. 4 is a scanning electron microscope (SEM) photograph showing a cross-section of the membrane after sandblasting was performed on the polymer electrolyte membrane in the single cell preparation process in accordance with Example 1 of the present invention. FIG. 5 is a SEM photograph showing the surface of the membrane.

It can be seen from FIGS. 4 and 5 that the surface roughness was increased in the cross-section of the membrane due to the sandblasting surface treatment.

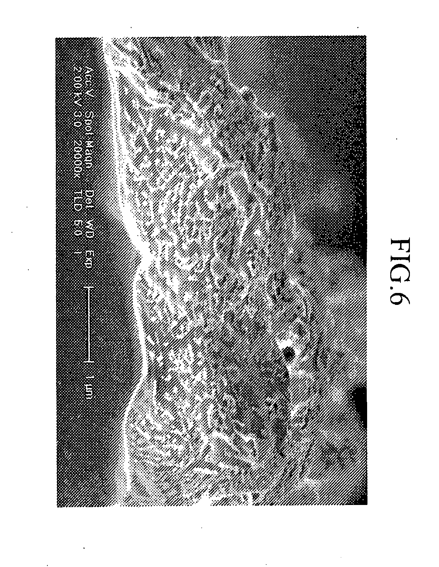

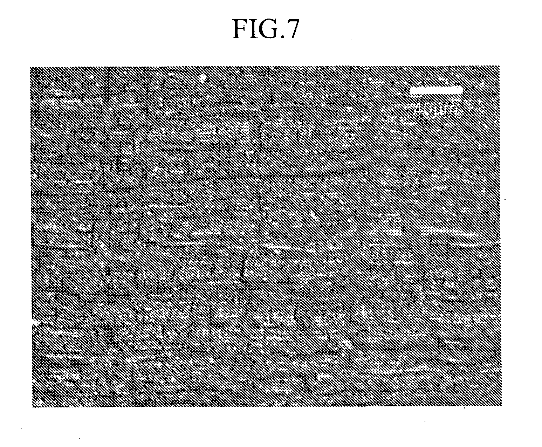

FIG. 6 is a SEM photograph (scale bar size: 1µm) showing the surface of the metal layer disposed on the membrane by performing Au sputtering onto the surface-treated polymer electrolyte membrane in the single cell preparation process of Example 1. FIG. 7 is a SEM photograph (scale bar size: 40µm) showing the surface of the membrane.

In FIG. 6, white parts are Au. In short, it can be seen from FIG. 6 that Au exists in the shape of an island on the metal layer.

Also, it can be seen from FIG. 7 that the Au metal layer formed on the sandblasted membrane also has roughness on the surface.

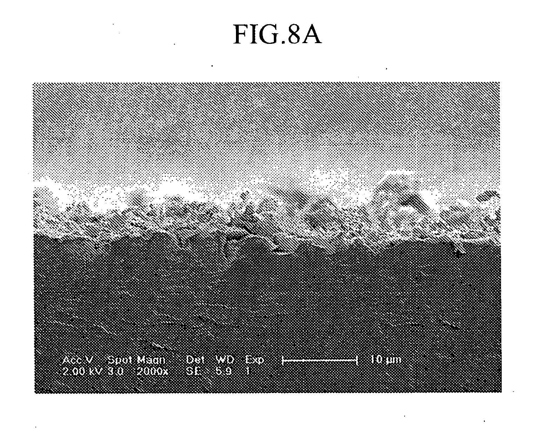

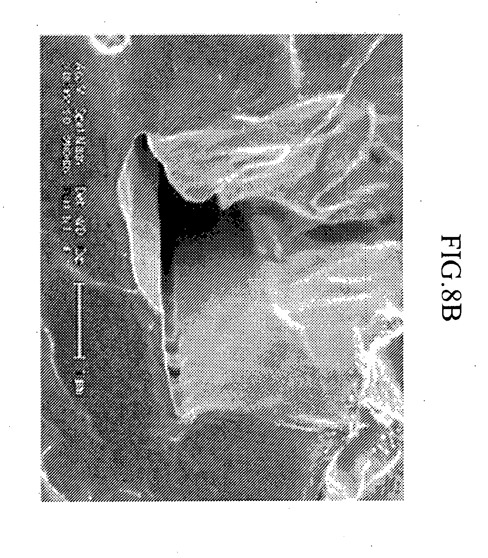

FIG. 8A is a SEM photograph showing a cross-section of the metal layer disposed on the membrane through Au sputtering onto the surface-treated polymer electrolyte membrane in the single cell preparation process of Example 1. FIG. 8B is a partial enlargement of the metal layer of FIG. 8A.

It can be seen from FIGS. 8A and 8B that the metal layer was formed on the membrane in the form of nano nodules.

### Example 2

A single cell was prepared according to Example 1, except that an Au metal layer was formed by performing Au sputtering onto a polymer electrolyte membrane on the side of the cathode instead of the anode side.

### Example 3

A single cell was prepared according to Example 1, except that an Au metal layer was formed in the polymer electrolyte membrane on the side of the cathode as well, by performing Au sputtering onto the polymer electrolyte membrane on the side of the cathode.

### Comparative Example 1

As for a membrane, a commercial product NAFION 115 membrane having a thickness of 125µm was rinsed with distilled water several times and treated with 1 liter of 2% hydrogen peroxide for 2 hours. The hydrogen peroxide was removed and the NAFION 115 membrane was rinsed with distilled water three times and treated again with 1 liter of 1 M sulfuric acid solution for 2 hours. The NAFION 115 membrane was rinsed again with distilled water and an H-type NAFION 115 membrane was thus prepared.

10wt% solid content of a composition for forming a catalyst layer was prepared by mixing 10g of Pt black (HISPEC^{®} 1000 produced by the Johnson Matthey Company), 10g of Pt/Ru black (HISPEC^{®} 6000 produced by the Johnson Matthey Company), 10g of water, 12wt% of a 5wt% concentration of NAFION solution, and 62g of isopropyl alcohol. The composition for forming a catalyst layer was sprayed onto one side of the polymer electrolyte membrane for coating. Herein, a catalyst layer area was 3.2X3.2 cm² and a catalyst loading quantity was 4 mg/cm². The catalyst layer prepared as above became an anode catalyst layer. A cathode catalyst layer was formed on the other side of the polymer electrolyte membrane in the same method.

Subsequently, an electrode substrate (uncatalyzed gas diffusion electrode, SGL Carbon 10DA) was prepared to have a microporous layer with a Vulcan black loading quantity of 1.4 mg/cm² by using a composition for forming a microporous layer including Vulcan black (VULCAN SDN 2). The electrode substrate was bonded with the polymer electrolyte membrane having the cathode catalyst layer by pressing the electrode substrate with a compression molder at 300 psi at 135°C for 3 minutes. Also, an electrode substrate (uncatalyzed gas diffusion electrode, SGL Carbon 31 BC) without a microporous layer was physically bonded with the polymer electrolyte membrane having the anode catalyst layer to thereby prepare a membrane-electrode assembly. The membrane-electrode assembly was interposed between two gaskets, interposed again between two separators having a gas flow channel and a cooling channel of a predetermined shape, and then compressed between Cu end plates to thereby prepare a single cell.

### Comparative Example 2

As for a membrane, a commercial product NAFION 115 membrane having a thickness of 125µm was rinsed with distilled water several times and treated with 1 liter of 2% hydrogen peroxide for 2 hours. The hydrogen peroxide was removed and the NAFION 115 membrane was rinsed with distilled water three times and treated again with 1 liter of 1 M sulfuric acid solution for 2 hours.

The NAFION 115 membrane was rinsed again with distilled water and an H-type NAFION 115 membrane was thus prepared. A single cell was prepared according to Comparative Example 1, except that a pattern was formed on both sides of the NAFION 115 membrane through sandpapering, and the patterned NAFION 115 membrane was used as the polymer electrolyte membrane.

Moisture retention properties of the polymer electrolyte membranes of Example 3 and Comparative Examples 1 and 2 were measured by using a differential scanning calorimeter (DSC).

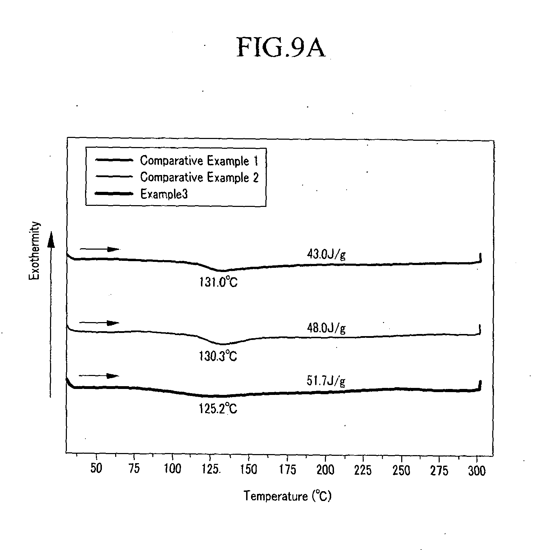

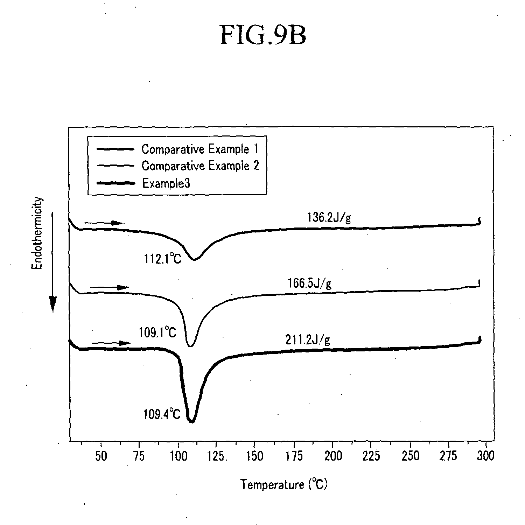

The moisture retention properties were measured after drying the polymer electrolyte membranes in a vacuum oven at 60°C for one hour, impregnating the polymer electrolyte membranes in distilled water at 60°C for one hour, and removing water from the polymer electrolyte membranes. The results are presented in FIGS. 9A and 9B.

As shown in FIGS. 9A and 9B, the polymer electrolyte membrane of Example 3 has a lower water ionic cluster transition peak temperature but a higher fusion heat than the polymer electrolyte membrane of Comparative Examples 1 and 2. It can be seen from the results that the reformed polymer electrolyte membrane has an excellent moisture retention property.

Methanol crossover currents of the polymer electrolyte membranes prepared in accordance with Example 3 and Comparative Examples 1 and 2 were measured at 50°C and 60°C by flowing in 4ml of 1 M methanol and nitrogen 200 sccm (Standard Cubic Centimeter per Minute, cm³/min). The methanol permeability was calculated from the methanol crossover currents and the results are shown in the following Table 1.

**Table 1**

| | Methanol permeability (cm²/S) | |
|---|---|---|
| | 50°C | 60°C |
| Comparative Example 1 | 2.38x10⁻⁶ | 3.03x10⁻⁶ |
| Comparative Example 2 | 2.23x10⁻⁶ | 2.86x10⁻⁶ |
| Example 1 | 2.07x10⁻⁶ | 2.57x10⁻⁶ |

As shown in Table 1, the polymer electrolyte membrane of Example 1 showed considerably low methanol permeability at 50°C and 60°C, compared to the polymer electrolyte membranes of Comparative Examples 1 and 2.

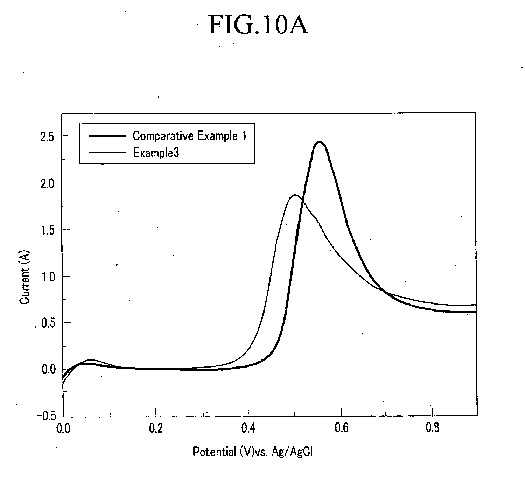

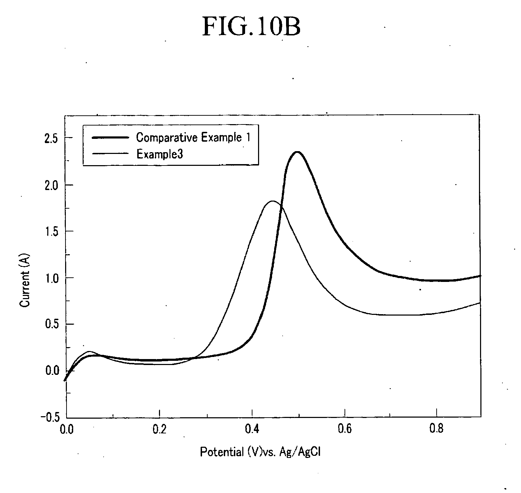

CO stripping voltammetries of the membrane-electrode assemblies prepared in accordance with Example 3 and Comparative Example 1 were measured at 50°C and 70°C. The measurement results are shown in FIGS. 10A and 10B.

FIG. 10A shows CO stripping voltammetry measurement results of the membrane-electrode assemblies prepared in accordance with Example 3 and Comparative Example 1 at 50°C, and FIG. 10B shows CO stripping voltammetry measurement results of the membrane-electrode assemblies prepared in accordance with Example 3 and Comparative Example 1 at 70°C.

As shown in FIGS. 10A and 10B, the CO oxidation initiation voltage of the catalyst in the membrane-electrode assembly including the surface-reformed polymer electrolyte membrane was lower than the CO oxidation initiation voltage of the catalyst in the membrane-electrode assembly of Comparative Example 1. Also, its current peak potential was lower as well. This is because the Au particles on the surface of the polymer electrolyte membrane weaken the connection force between PtRu catalyst and CO and suppresses catalyst poisoning.

Power density of the unit cells prepared in accordance with Examples 1 to 3 and Comparative Examples 1 and 2 were measured at 60°C and 70°C respectively by providing 1 M methanol and ambient air with anode and cathode of the unit cells. The measurement results are shown in the following Table 2.

**Table 2**

| | | Example 1 | Example 2 | Example 3 | Comparative Example 1 | Comparative Example 2 |
|---|---|---|---|---|---|---|
| Power density at 60°C (mW/cm²) | 0.45V | 81 | 77 | 64 | 72 | 67 |
| | 0.40V | 105 | 104 | 93 | 90 | 92 |
| | Max. | 117 | 125 | 114 | 108 | 112 |
| Power density at 70°C (mW/cm²) | 0.45V | 108 | 93 | 86 | 91 | 82 |
| | 0.40V | 138 | 128 | 117 | 113 | 115 |
| | Max. | 154 | 164 | 154 | 133 | 151 |

As illustrated in Table 2, the fuel cells of Examples 1 to 3 having a metal layer and a polymer electrolyte membrane with rough morphology showed excellent methanol permeability and high power density, compared to the fuel cell of Comparative Example 1 using a pure NAFION membrane as a polymer electrolyte membrane and the fuel cell of Comparative Example 2 including a polymer electrolyte membrane having only surface roughness. In addition, Table 2 shows that the fuel cell of Example 1 having the metal layer only in the side of the anode had superior power density to the fuel cell of Example 2.

One embodiment of the present invention provides a high-performance membrane-electrode assembly for a fuel cell that can improve interaction between the polymer electrolyte membrane and the catalyst by improving a contact area between the polymer electrolyte membrane and the catalyst and adherence between them, improve a moisture retention property of the polymer electrolyte membrane, and reduce crossover of fuel caused by deteriorated osmotic pressure.

## Claims

1. A membrane-electrode assembly (112) for a fuel cell, comprising:
an anode and a cathode (30, 30') disposed opposite to each other, wherein each electrode (30, 30') includes an electrode substrate (50, 50') and a catalyst layer (70, 70') disposed thereon, the catalyst layer (70, 70') including a platinum-based catalysts including platinum, ruthenium, osmium, platinum-ruthenium alloys, platinum-osmium alloys, platinum-palladium alloys, platinum-M alloys, and combinations thereof, where M is a transition element selected from the group consisting of Ga, Ti, V, Cr, Mn, Fe, Co, Ni, Cu, Zn, Sn, Mo, W, Rh, and combinations thereof;
a polymer electrolyte membrane (20) having a thickness in the range of 50 to 150 µm and an average surface roughness in the range of 200 nm to 2 µm on at least one side and being interposed between the anode and the cathode (30, 30') such that the catalyst layers (70, 70') of the anode and cathode face the polymer electrolyte membrane (20), and
a metal layer (60, 60') consisting of Au, having a thickness in the range of 100 nm to 2 µm and being randomly formed on the at least one side of the polymer electrolyte membrane (20) showing the mentioned surface roughness.

2. The membrane-electrode assembly of claim 1, wherein the polymer electrolyte membrane (20) is patterned on both sides thereof.

3. The membrane-electrode assembly of claim 1, wherein the polymer electrolyte membrane (20) comprises a polymer resin having proton conductivity.

4. The membrane-electrode assembly of any of the preceding claims, wherein the polymer electrolyte membrane (20) comprises a polymer resin having a cation exchange group at its side chain selected from the group consisting of a sulfonic acid group, a carboxylic acid group, a phosphoric acid group, a phosphonic acid group, and derivatives thereof.

5. The membrane-electrode assembly of any of the preceding claims, wherein the metal layer (60, 60') has a form of a nano nodule.

6. The membrane-electrode assembly of any of claims 1, 3 and 4, wherein the metal layer (60, 60') is disposed on one side of the polymer electrolyte membrane (20) adjacent to the anode.

7. A method for fabricating a membrane-electrode assembly (112) for a fuel cell, comprising the steps of:
setting up an average surface roughness in the range of 200nm to 2µm on at least one side of a polymer electrolyte membrane (20) having a thickness in the range of 50 to 150 µm through surface treatment;
forming a metal layer (60, 60') consisting of Au and having a thickness in the range of 100 nm to 2 µm on the at least one side of the polymer electrolyte membrane (20) showing the mentioned surface roughness; and
forming an anode and a cathode (30, 30'), each including an electrode substrate (50, 50') and a catalyst layer (70, 70') disposed thereon, on the polymer electrolyte membrane (20), respectively the metal layer (60, 60') by interposing the polymer electrolyte membrane (20) between the anode and the cathode (30, 30') such that the catalyst layers (70, 70') of the anode and cathode faces the polymer electrolyte membrane (20), wherein the catalyst layer (70, 70') includes a platinum-based catalysts including platinum, ruthenium, osmium, platinum-ruthenium alloys, platinum-osmium alloys, platinum-palladium alloys, platinum-M alloys, and combinations thereof, where M is a transition element selected from the group consisting of Ga, Ti, V, Cr, Mn, Fe, Co, Ni, Cu, Zn, Sn, Mo, W, Rh, and combinations thereof.

8. The method of claim 7, wherein the polymer electrolyte membrane (20) comprises a cation exchange resin having proton conductivity.

9. The method of claims 7 or 8, wherein the surface treatment is performed in a method selected from the group consisting of sandpapering, sandblasting, corona treatment, rubbing, pressing, plasma treatment, electron beam irradiation, and combinations thereof.

10. The method of any of claims 7 to 9, wherein the metal layer (60, 60') is formed by a method selected from the group consisting of sputtering, physical vapor deposition, chemical vapor deposition, plasma enhancement chemical deposition, thermal chemical deposition, ion beam evaporation, vacuum thermal evaporation, laser ablation, thermal evaporation, electron beam evaporation, and combinations thereof.

11. The method of claim 10, wherein the metal layer (60, 60') is formed using sputtering while applying a current in a range of 3 to 9mA.

12. The method of claims 10 or 11, wherein the metal layer (60, 60') is formed by performing sputtering for 50 to 300 seconds.

13. A fuel cell system comprising:
at least one electricity generating element adapted to generate electricity through an electrochemical reaction between a fuel and an oxidant, and that comprises
a membrane-electrode assembly (112) according to any of claims 1 to 6;
separators disposed on each side of the membrane-electrode assembly (112);
a fuel supplier adapted for supplying the fuel to the electricity generating element; and
an oxidant supplier adapted for supplying the oxidant to the electricity generating element.

## Patentansprüche

1. Membranelektrodenanordnung (112) für eine Brennstoffzelle, aufweisend:
eine Anode und eine Kathode (30, 30'), die einander gegenüberliegend angeordnet sind, wobei jede Elektrode (30, 30') ein Elektrodensubstrat (50, 50') und eine auf diesem angeordnete Katalysatorschicht (70, 70') aufweist, wobei die Katalysatorschicht (70, 70') einen Katalysator auf der Basis von Platin aufweist, der Platin, Ruthenium, Osmium, Platin-Ruthenium-Legierungen, Platin-Osmium-Legierungen, Platin-Palladium-Legierungen, Platin-M-Legierungen und Kombinationen derselben aufweist, wobei M ein Übergangselement ist, das aus der Gruppe bestehend aus Ga, Ti, V, Cr, Mn, Fe, Co, Ni, Cu, Zn, Sn, Mo, W, Rh und Kombinationen derselben ausgewählt ist;
eine Polymer-Elektrolyt-Membran (20), die eine Dicke im Bereich von 50 bis 150 µm und eine mittlere Oberflächenrauheit im Bereich von 200 nm bis 2 µm auf zumindest einer Seite aufweist und derart zwischen der Anode und der Kathode (30, 30') angeordnet ist, dass die Katalysatorschichten (70, 70') der Anode und Kathode der Polymer-Elektrolyt-Membran (20) zugewandt sind, und
eine Metallschicht (60, 60') bestehend aus Au, die eine Dicke im Bereich von 100 nm bis 2 µm aufweist und auf der zumindest einen Seite der Polymer-Elektrolyt-Membran (20), die die erwähnte Oberflächenrauheit aufweist, nach dem Zufallsprinzip ausgebildet ist.

2. Membranelektrodenanordnung nach Anspruch 1, wobei die Polymer-Elektrolyt-Membran (20) auf beiden Seiten derselben strukturiert ist.

3. Membranelektrodenanordnung nach Anspruch 1, wobei die Polymer-Elektrolyt-Membran (20) ein Polymerharz aufweist, das eine Protonenleitfähigkeit aufweist.

4. Membranelektrodenanordnung nach einem der vorhergehenden Ansprüche, wobei die Polymer-Elektrolyt-Membran (20) ein Polymerharz aufweist, das eine Kationenaustauschgruppe in seiner Seitenkette aufweist, die aus der Gruppe bestehend aus einer Sulfonsäuregruppe, einer Carbonsäuregruppe, einer Phosphorsäuregruppe, einer Phosphonsäuregruppe und Derivaten derselben ausgewählt ist.

5. Membranelektrodenanordnung nach einem der vorhergehenden Ansprüche, wobei die Metallschicht (60, 60') eine Form eines Nano-Knötchens aufweist.

6. Membranelektrodenanordnung nach einem der Ansprüche 1, 3 und 4, wobei die Metallschicht (60, 60') auf einer zur Anode benachbarten Seite der Polymer-Elektrolyt-Membran (20) angeordnet ist.

7. Verfahren zur Herstellung einer Membranelektrodenanordnung (112) für eine Brennstoffzelle, die folgenden Schritte aufweisend:
Einstellen einer mittleren Oberflächenrauheit im Bereich von 200 nm bis 2 µm auf zumindest einer Seite einer Polymer-Elektrolyt-Membran (20), die eine Dicke im Bereich von 50 bis 150 µm aufweist, durch eine Oberflächenbehandlung;
Ausbildung einer Metallschicht (60, 60'), die aus Au besteht und eine Dicke im Bereich von 100 nm bis 2 µm aufweist, auf der zumindest einen Seite der Polymer-Elektrolyt-Membran (20), die die erwähnte Oberflächenrauheit aufweist; und
Ausbildung einer Anode und einer Kathode (30, 30'), von denen jede ein Elektrodensubstrat (50, 50') und eine auf diesem angeordnete Katalysatorschicht (70, 70') aufweist, auf der Polymer-Elektrolyt-Membran (20), beziehungsweise der Metallschicht (60, 60'), durch Anordnen der Polymer-Elektrolyt-Membran (20) zwischen der Anode und der Kathode (30, 30'), derart, dass die Katalysatorschichten (70, 70') der Anode und der Kathode der Polymer-Elektrolyt-Membran (20) zugewandt sind, wobei die Katalysatorschicht (70, 70') einen Katalysator auf der Basis von Platin aufweist, der Platin, Ruthenium, Osmium, Platin-Ruthenium-Legierungen, Platin-Osmium-Legierungen, Platin-Palladium-Legierungen, Platin-M-Legierungen und Kombinationen derselben aufweist, wobei M ein Übergangselement ist, das aus der Gruppe bestehend aus Ga, Ti, V, Cr, Mn, Fe, Co, Ni, Cu, Zn, Sn, Mo, W, Rh und Kombinationen derselben ausgewählt ist.

8. Verfahren nach Anspruch 7, wobei die Polymer-Elektrolyt-Membran (20) ein Kationenaustauscherharz aufweist, das eine Protonenleitfähigkeit aufweist.

9. Verfahren nach Anspruch 7 oder 8, wobei die Oberflächenbehandlung in einem Verfahren durchgeführt wird, das aus der Gruppe bestehend aus Schleifen mit Sandpapier, Abblasen mit Sandstrahlen, Coronabehandlung, Reiben, Pressen, Plasmabehandlung, Elektronenstrahlbestrahlung und Kombinationen derselben ausgewählt ist.

10. Verfahren nach einem der Ansprüche 7 bis 9, wobei die Metallschicht (60, 60') durch ein Verfahren ausgebildet wird, das aus der Gruppe bestehend aus Sputtern, physikalischer Gasphasenabscheidung, chemischer Gasphasenabscheidung, plasmaunterstützter chemischer Abscheidung, thermischer chemischer Abscheidung, Ionenstrahlverdampfung, vakuumthermischer Verdampfung, Laserablation, thermischer Verdampfung, Elektronenstrahlverdampfung und Kombinationen derselben ausgewählt ist.

11. Verfahren nach Anspruch 10, wobei die Metallschicht (60, 60') durch Sputtern ausgebildet wird, während ein Strom im Bereich von 3 bis 9 mA angelegt wird.

12. Verfahren nach den Ansprüchen 10 oder 11, wobei die Metallschicht (60, 60') durch die Durchführung von Sputtern für 50 bis 300 Sekunden ausgebildet wird.

13. Brennstoffzellensystem, aufweisend:
zumindest ein Elektrizitätserzeugungselement, das ausgebildet ist, durch eine elektrochemische Reaktion zwischen einem Brennstoff und einem Oxidationsmittel Elektrizität zu erzeugen, und das aufweist:
eine Membranelektrodenanordnung (112) nach einem der Ansprüche 1 bis 6,
Separatoren, die auf jeder Seite der Membranelektrodenanordnung (112) angeordnet sind;
eine Brennstoffversorgungsvorrichtung, die zur Versorgung des Elektrizitätserzeugungselements mit Brennstoff ausgebildet ist; und
eine Oxidationsmittelversorgungsvorrichtung, die zur Versorgung des Elektrizitätserzeugungselements mit Oxidationsmittel ausgebildet ist.

## Revendications

1. Assemblage membrane-électrodes (112) pour une pile à combustible comprenant :
une anode et une cathode (30, 30') disposées à l'opposé l'une de l'autre, où chaque électrode (30, 30') comprend un substrat d'électrode (50, 50') et une couche de catalyseur (70, 70') disposée sur ce substrat, la couche de catalyseur (70, 70') comprenant un des catalyseurs à base de platine, comprenant le platine, le ruthénium, l'osmium, des alliages platine-ruthénium, des alliages platine-osmium, des alliages platine-palladium, des alliages platine-M et leurs associations, où M représente un élément de transition choisi dans le groupe consistant en Ga, Ti, V, Cr, Mn, Fe, Co, Ni, Cu, Zn, Sn, Mo, W, Rh et leurs associations ;
une membrane électrolytique polymère (20) ayant une épaisseur comprise dans l'intervalle de 50 à 150 µm et une rugosité moyenne de surface comprise dans l'intervalle de 200 nm à 2 µm sur au moins une face et étant interposée entre l'anode et la cathode (30, 30') de telle sorte que les couches de catalyseur (70, 70') de l'anode et de la cathode soient tournées vers la membrane électrolytique polymère (20), et
une couche métallique (60, 60') consistant en Au, ayant une épaisseur comprise dans l'intervalle de 100 nm à 2 µm et étant formée de manière aléatoire sur ladite au moins une face de la membrane électrolytique polymère (20) présentant la rugosité de surface mentionnée.

2. Assemblage membrane-électrodes suivant la revendication 1, dans lequel la membrane électrolytique polymère (20) est munie d'un motif sur ses deux faces.

3. Assemblage membrane-électrodes suivant la revendication 1, dans lequel la membrane électrolytique polymère (20) comprend une résine polymère douée de conductivité des protons.

4. Assemblage membrane-électrodes suivant l'une quelconque des revendications précédentes, dans lequel la membrane électrolytique polymère (20) comprend une résine polymère ayant un groupe échangeur de cations au niveau de sa chaîne latérale choisi dans le groupe consistant en un groupe acide sulfonique, un groupe acide carboxylique, un groupe acide phosphorique, un groupe acide phosphonique et leurs dérivés.

5. Assemblage membrane-électrodes suivant l'une quelconque des revendications précédentes, dans lequel la couche métallique (60, 60') est sous forme d'un nano-nodule.

6. Assemblage membrane-électrodes suivant l'une quelconque des revendications 1, 3 et 4, dans lequel la couche métallique (60, 60') est disposée sur une face de la membrane électrolytique polymère (20) adjacente à l'anode.

7. Procédé pour la fabrication d'un assemblage membrane-électrodes (112) pour une pile à combustible, comprenant les étapes consistant à :
établir une rugosité moyenne de surface comprise dans l'intervalle de 200 nm à 2 µm sur au moins une face d'une membrane électrolytique polymère (20) ayant une épaisseur comprise dans l'intervalle de 50 à 150 µm par un traitement de surface ;
former une couche métallique (60, 60') consistant en Au et ayant une épaisseur comprise dans l'intervalle de 100 nm à 2 µm sur ladite au moins une face de la membrane électrolytique polymère (20) présentant la rugosité de surface mentionnée ; et
former une anode et une cathode (30, 30'), chacune comprenant un substrat d'électrode (50, 50') et une couche de catalyseur (70, 70') disposée sur ce substrat, sur la membrane électrolytique polymère (20), respectivement la couche métallique (60, 60') en interposant la membrane électrolytique polymère (20) entre l'anode et la cathode (30, 30') de telle sorte que les couches de catalyseur (70, 70') de l'anode et de la cathode soient tournées vers la membrane électrolytique polymère (20), dans lequel la couche de catalyseur (70, 70') comprend un des catalyseurs à base de platine comprenant le platine, le ruthénium, l'osmium, des alliages platine-ruthénium, des alliages platine-osmium, des alliages platine-palladium, des alliages platine-M et leurs associations, où M représente un élément de transition choisi dans le groupe consistant en Ga, Ti, V, Cr, Mn, Fe, Co, Ni, Cu, Zn, Sn, Mo, W, Rh et leurs associations.

8. Procédé suivant la revendication 7, dans lequel la membrane électrolytique polymère (20) comprend une résine échangeuse de cations douée de conductivité des protons.

9. Procédé suivant la revendication 7 ou 8, dans lequel le traitement de surface est effectué dans un procédé choisi dans le groupe consistant en le passage au papier de verre, le sablage, le traitement corona, le frottement, la compression, le traitement par plasma, l'irradiation avec un faisceau d'électrons et leurs associations.

10. Procédé suivant l'une quelconque des revendications 7 à 9, dans lequel la couche métallique (60, 60') est formée par un procédé choisi dans le groupe consistant en la pulvérisation cathodique, le dépôt physique en phase vapeur, le dépôt chimique en phase vapeur, le dépôt chimique amplifié par plasma, le dépôt thermochimique, l'évaporation par faisceau ionique, l'évaporation thermique sous vide, l'ablation au laser, l'évaporation thermique, l'évaporation par faisceau d'électrons et leurs associations.

11. Procédé suivant la revendication 10, dans lequel la couche métallique (60, 60') est formée en utilisant la pulvérisation cathodique tout en appliquant un courant dans l'intervalle de 3 à 9 mA.

12. Procédé suivant la revendication 10 ou 11, dans lequel la couche métallique (60, 60') est formée en effectuant une pulvérisation cathodique pendant 50 à 300 secondes.

13. Système de pile à combustible comprenant :
au moins un élément engendrant de l'électricité adapté à engendrer de l'électricité par une réaction électrochimique entre un combustible et un oxydant, et qui comprend
un assemblage membrane-électrodes (112) suivant l'une quelconque des revendications 1 à 6 ;
des séparateurs disposés sur chaque face de l'assemblage membrane-électrodes (112) ;
un système d'apport de combustible adapté à fournir le combustible à l'élément engendrant de l'électricité ; et
un système d'apport d'oxydant adapté à fournir l'oxydant à l'élément engendrant de l'électricité.
